# EUROPEAN PATENT SPECIFICATION

(11) **EP 1 557 330 B1**
(45) Date of publication and mention of the grant of the patent: **20.12.2006**
(21) Application number: 04380183.6
(22) Date of filing: 21.09.2004
(51) Int. Cl.: B60T 7/06, B60R 21/09

(54) **Pedal with an anti-collision safety mechanism**
Pedal mit Antikollisionssicherheitsmechanismus
Pédale avec mécanisme de sécurité anti-collision

(30) Priority: 20.01.2004 ES 200400106
(43) Date of publication of application: 27.07.2005
(73) Proprietor: BATZ, S. COOP., 48140 Igorre (Bizkaia) (ES)
(72) Inventor: Burguera Albizuri, Fernando, 48014 Bilbao (Bizkaia) (ES); Palacio Argüelles, Joseba, 48980 Santurtzi (Bizkaia) (ES); Etxebarrena Allende, Rafael, 48004 Bilbao (Bizkaia) (ES); Bidaguren Diego, Inigo, 48014 Bilbao (Bizkaia) (ES)
(74) Representative: Fernandez Guzman, Juan

(56) References cited:
- EP-A- 1 153 805
- EP-A- 1 323 602
- WO-A-02/30718
- WO-A-03/045750
- WO-A-03/106234

## Description

### TECHNICAL FIELD

The present invention relates to pedals for vehicles and more specifically to pedals comprising anti-collision safety mechanisms.

### PRIOR ART

Pedals for vehicles with diverse safety mechanisms activated only in the event of a head-on collision are already known. These mechanisms must safeguard the integrity of the lower extremities of the driver of the vehicle. In order to achieve this, in the event of a collision the pedal must be prevented from moving towards the driver at a magnitude or a speed that is dangerous.

With regard to pedals, in a potentially harmful head-on collision the wall to which the pedals are connected is deformed thus pushing the pedal support structure and the pedals themselves against the driver. In such a situation, the safety mechanism must be activated to prevent the pedals impacting against the lower extremities of the driver.

Other safety mechanisms are based on the distance between the wall where the pedals are secured and a part of the vehicle considered to be non-deformable in the accident. In the event of a head-on collision said wall is moved, thus reducing the distance between the wall and the deformation-resistant part. In such cases a mechanism is activated that prevents the pedals from transmitting the energy of the impact to the lower extremities of the driver. There are various means of achieving this such as breaking the turning shaft on the pedal, breaking the drive rod to the servo brake or clutch cylinder or forcing the pedal to make a negative movement.

EP 1 153 805 A2 describes a safety mechanism for pedals in which the pedal pivots around a shaft connected to a support part. The ends of the shaft are housed in two guides included in the support part and said ends are immobilised in the guides by a fastening element. In the event of a head-on collision, said fastening element is released by the action of a deformation-resistant part of the vehicle with the ends of the shaft moving along the guides, thus causing the lower end of the pedal to move back in relation to the driver.

WO 03/045750 A1 discloses a pedal assembly mechanism in which the pedal also pivots around a shaft connected to a support part. The ends of the shaft are housed in two guides included in the support part. The mechanism includes a lever that acts on the shaft in the event of a head-on collision and moves it along the guides to a secondary position in which the end of the pedal moves back in relation to the driver. In the normal operating position it is the lever itself, along with the additional elements, that holds the shaft in position.

WO 02/30718 A1 describes a collapsible pedal box with a pedal pivoting around a shaft connected to side walls by means of supports that are locked to the side walls. Each of said supports comprises a lever so that, in the event of a head-on collision, a deformation-resistant part acts on said levers, rotating said supports to a position where said supports can be unlocked. The cooperation between said levers and flanges of the side walls make the supports move outwardly when said supports reach the position where they can be unlocked.

### DISCLOSURE OF THE INVENTION

The object of the invention is to provide a pedal for vehicles that comprises a safety mechanism preventing said pedal from injuring the lower extremities of the driver in the event of a head-on collision, improving some of the features of pedals of the prior art.

The pedal with a safety mechanism of the invention pivots around a shaft connected to a support part, with said support part linked to a wall separating the passenger compartment from the engine. The safety mechanism comprises means that move the shaft on the pedal towards the driver in the event of a head-on collision as a result of the action of a substantially deformation-resistant part of the vehicle.

The means that move the shaft comprise a lever so that, in the event of a head-on collision, the substantially deformation-resistant part acts on the lever with said lever causing the shaft to move in such a way that said shaft becomes detached from the support part.

In the event of a head-on collision, the backward movement of the inventive pedal in relation to the driver is not restricted to a predetermined course, thus preventing the potentially harmful consequences of any such restriction of the course, as in certain collisions said course may not be sufficient to prevent the end of the pedal from damaging the lower extremities of the driver. In addition, the inventive pedal is free to move back in relation to the driver as far as is necessary during the head-on collision but is prevented from moving towards the driver as the sliding part actively pushes the shaft on the pedal.

These and other advantages and characteristics of the invention will be made evident in the light of the drawings and the detailed description thereof.

### DESCRIPTION OF THE DRAWINGS

FIGURE 1 is a profile view of an embodiment of the invention in its normal position.
FIGURE 2 is a perspective view of the embodiment of FIGURE 1 in its normal position.
FIGURE 3 is a ground view of the embodiment of FIGURE 1 in its normal position.
FIGURE 4 is a profile view according to section IV-IV of the embodiment of FIGURE 1 in its normal position.
FIGURE 5 is a profile view of the embodiment of FIGURE 1 following a head-on collision.
FIGURE 6 is a perspective view of the embodiment of FIGURE 1 following a head-on collision.
FIGURE 7 is a ground view of certain elements in the embodiment of the invention in FIG. 1 in its normal position.
FIGURE 8 is a ground view of the elements of FIGURE 7 in an initial phase of a head-on collision.
FIGURE 9 is a ground view of the elements of FIGURE 7 in a second phase of a head-on collision.
FIGURE 10 is an exploded view of the detachable part during the collision that fastens the pedal shaft to the support, and of its housing, corresponding to the embodiment of FIGURE 1.
FIGURE 11 is an exploded view of the embodiment of FIGURE 1.
FIGURE 12 is a profile view in section of a second embodiment of the invention in its normal position and a view according to section XII-XII.
FIGURE 13 is a profile view in section of the embodiment of FIGURE 12 in an initial phase of a head-on collision and a view according to section XIII-XIII.
FIGURE 14 is a profile view in section of the embodiment of FIGURE 12 in a second phase of a head-on collision and a view according to section XIV-XIV.
FIGURE 15A is a profile view in section of the shaft of the embodiment of FIGURE 12, with the lateral prolongations in their normal position.
FIGURE 15B is a perspective and semi-section view of the shaft of FIGURE 15A, with the lateral prolongations in their normal position.
FIGURE 15C is a profile view in section of the shaft of the embodiment of FIGURE 15A, with the lateral prolongations retracted.
FIGURE 15D is a perspective and semi-section view of the shaft of FIGURE 15A, with the lateral prolongations retracted.

### DETAILED DESCRIPTION OF THE INVENTION

With reference to the figures, the inventive pedal with an anti-collision safety mechanism pivots around a shaft 2 connected to a support part 3. The pedal 1 comprises a shoe 14 and is connected to the corresponding actuator by a rod 15. Said actuator will be the servo-brake if the pedal is a brake pedal, and it will be the clutch cylinder if the pedal is a clutch pedal.

The safety mechanism comprises means that move the shaft 2 in the event of a head-on collision as a result of the action of a substantially deformation-resistant part 4 of the vehicle.

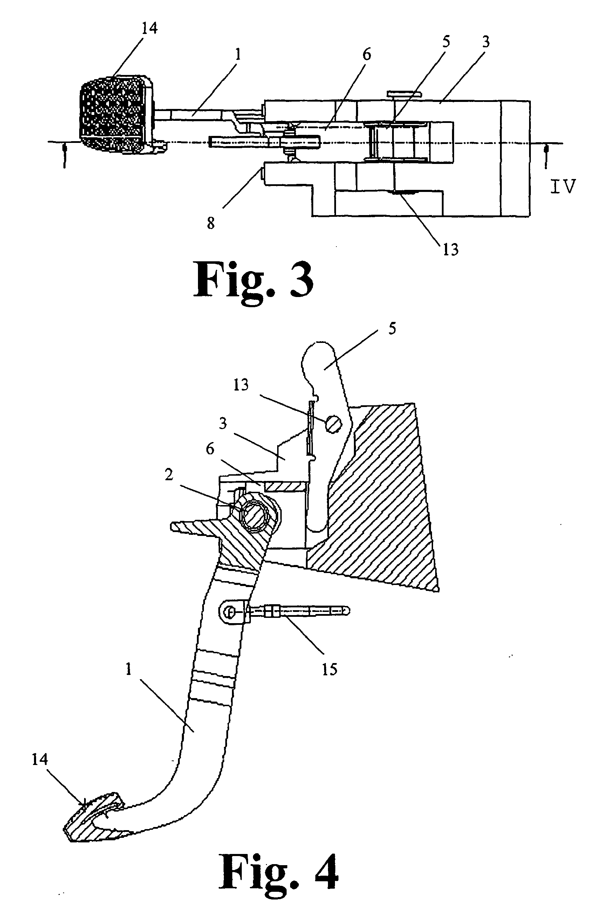

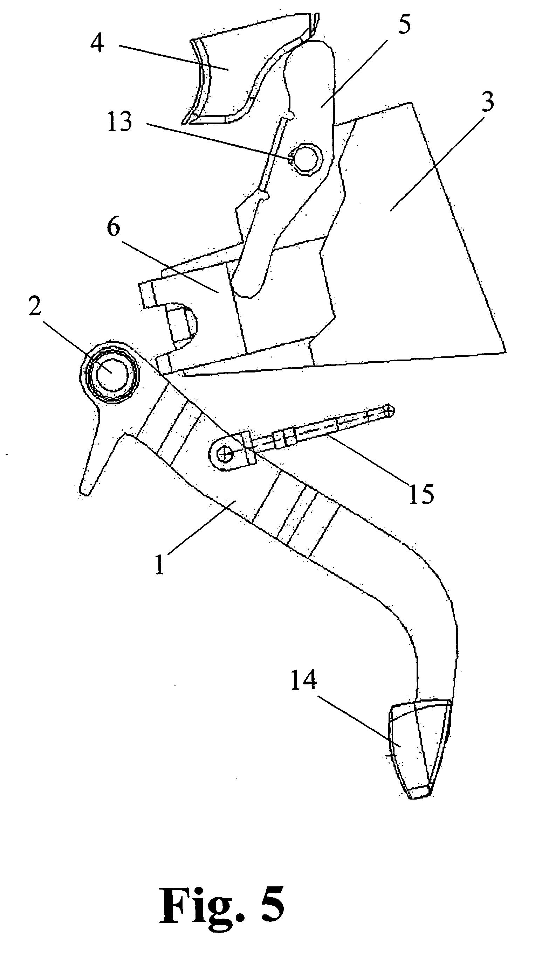

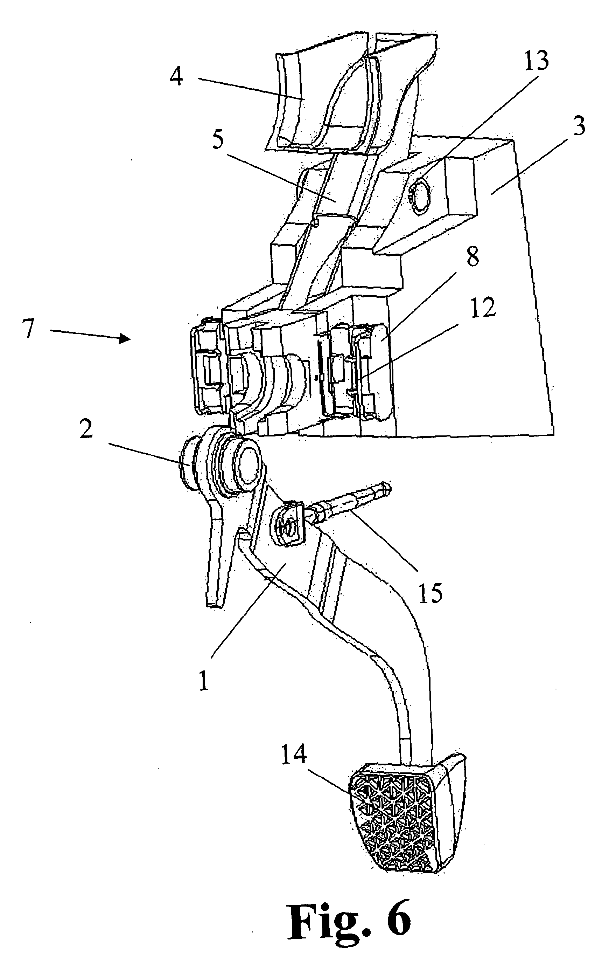

With reference to figures 4 and 5, the means that move the shaft 2 comprise a lever 5 and a sliding part 6. The lever 5 is linked to the support part 3 by a turning shaft 13, and one end of said lever 5 faces the substantially deformation-resistant part 4, and the other end of said lever 5 faces the sliding part 6. As a result, in the event of a head-on collision, the substantially deformation-resistant part 4 acts on the lever 5, and as a consequence of this said lever 5 acts on the sliding part 6 and said sliding part 6 pushes the shaft 2 on the pedal 1, forcing said shaft 2 to become detached from the support part 3, as shown in figures 5 and 6. In figure 5 part of the support part 3 has been removed in order to show how the lever 5 and the sliding part 6 interact. As can be seen in figure 5, said sliding part 6 moves on the support part 3.

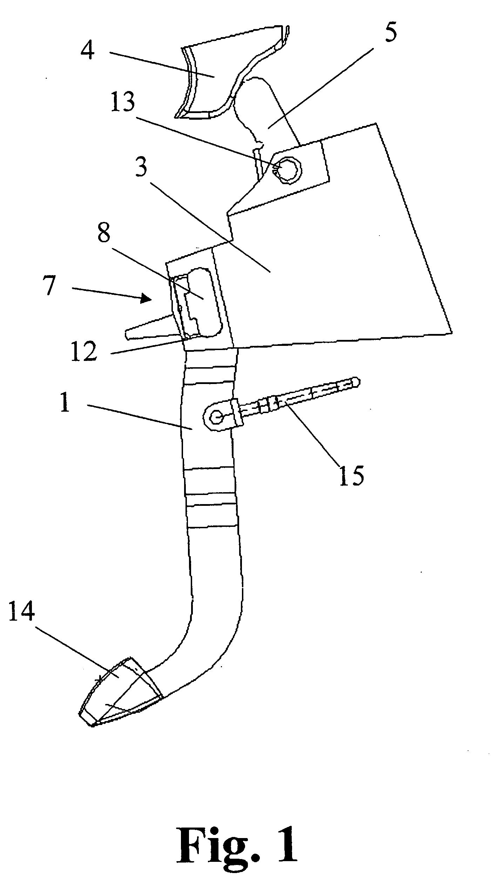

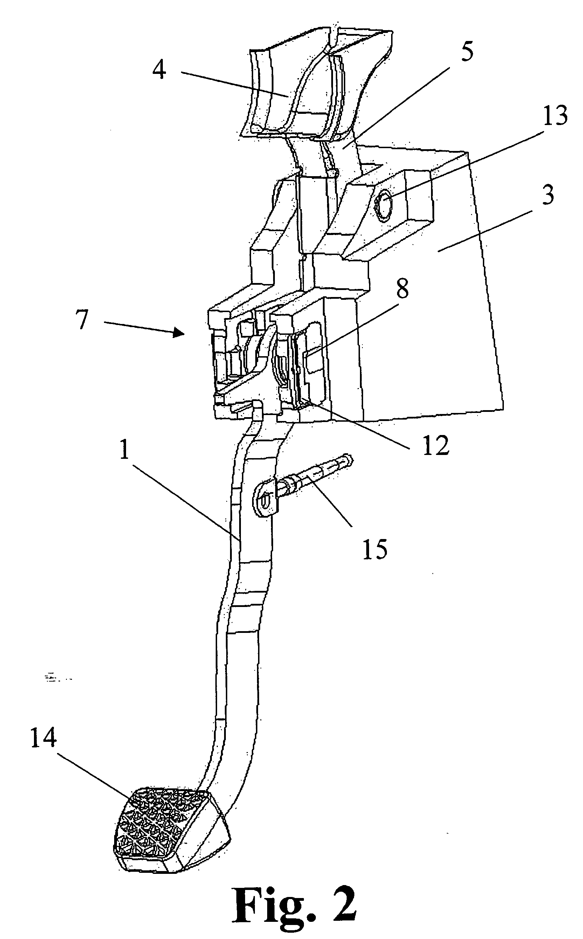

In a first embodiment, shown in figures 1 to 11, the safety mechanism comprises fastening means 7 connected to the support part 3 which are used to fasten the shaft 2. Said fastening means 7 are detached in the event of a head-on collision by the action of the sliding part 6. Consequently, the part that pushes the shaft 2 of the pedal 1 is also the part that causes the fastening means 7 to become detached.

In addition, the fastening means 7 are the only elements in the safety mechanism that operate during the normal use of the inventive pedal 1, i.e. the other elements in said safety mechanism (the lever 5 and the sliding part 6) do not operate at all during the normal use of said pedal 1, thus helping to make the mechanism safer.

The force that the sliding part 6 has to expend in order to detach the fastening means 7 is perpendicular to the direction of the force exerted by the shaft 2 of the pedal 1 on said fastening means 7 during the normal use of the pedal 1, thus preventing said force from contributing to the detachment of the fastening means 7 during normal use of the pedal 1. More specifically, the fastening means 7 comprise a part 8 that is clipped laterally to the support part 2 on each side of the shaft 2.

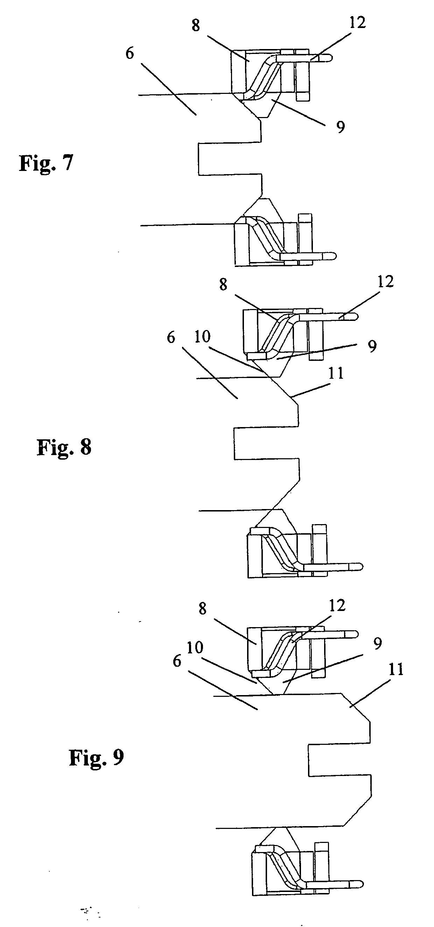

In order to unclip these parts 8, each part 8 comprises at least one projection 9 upon which the sliding part 6 acts, with the action of the sliding part 6 on said projection 9 causing the parts to unclip. The projection 9 on each part 8 comprises a slope 10, and the sliding part 6 also comprises a slope 11 facing each slope 10. As a result, each slope 11 on the sliding part 6 is supported on the slope 10 on the corresponding part 8, forcing the slopes 11 against the slopes 10 while the sliding part 6 moves, thus unclipping the parts 8, in accordance with the sequence detailed in figures 7 to 9.

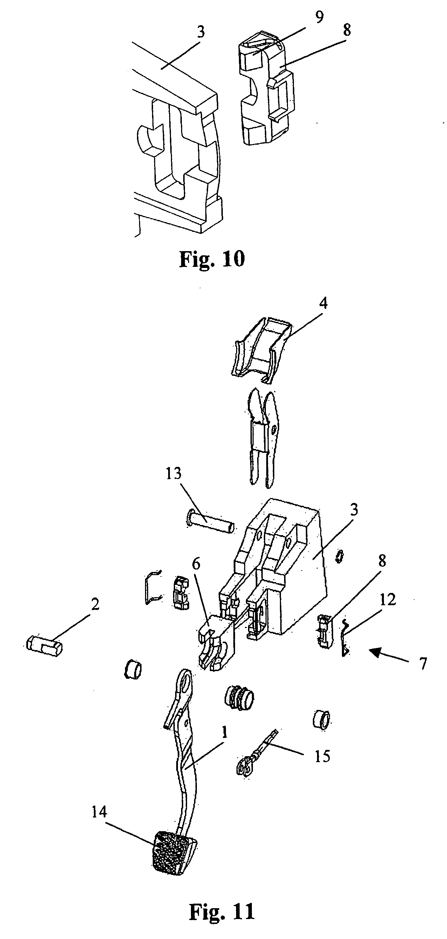

Figure 10 shows the configuration of part 8 of this embodiment in detail. As figure 10 shows, the part 8 comprises two projections 9: one in the top section and another in the bottom section. Located between both projections 9 is a housing where part of the shaft 2 is located.

In the embodiment described, shown in exploded view in figure 10, the fastening means 7 also comprise a wire 12 on either side of the shaft 2, with said wire 12 acting as an additional element fastening the part 8 to the support part 3.

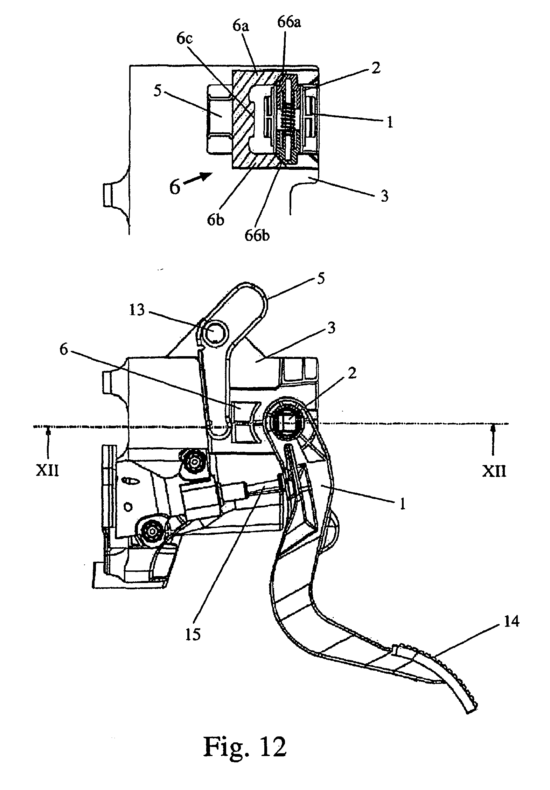

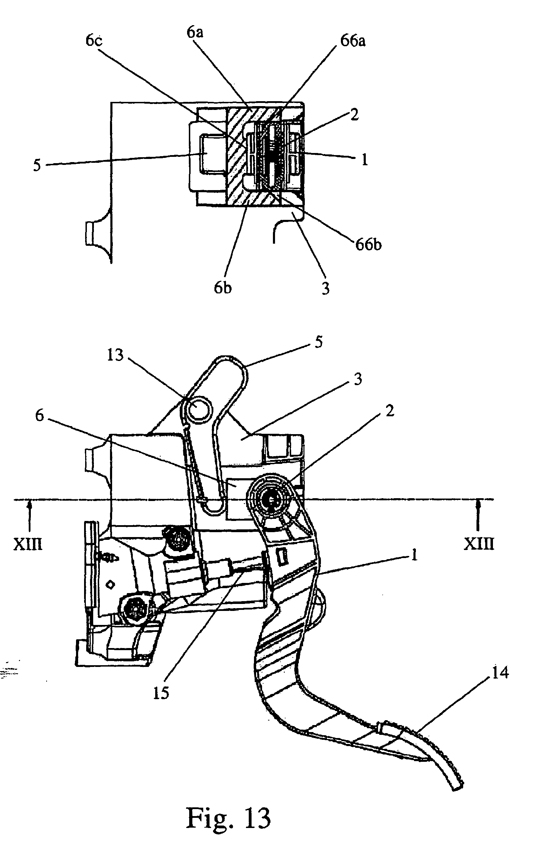

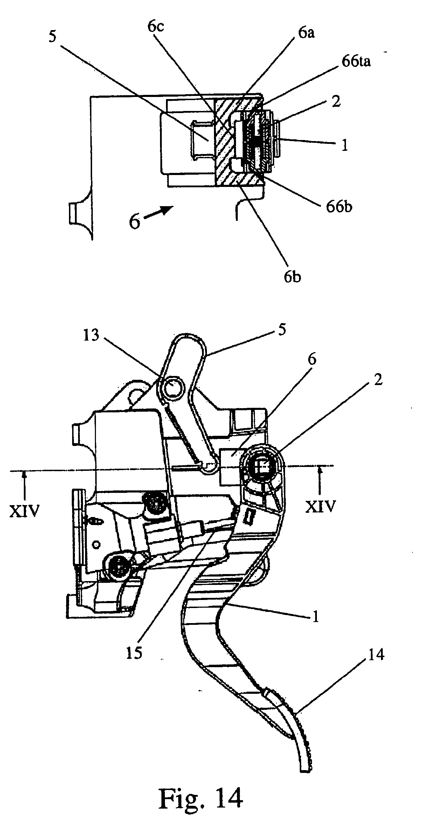

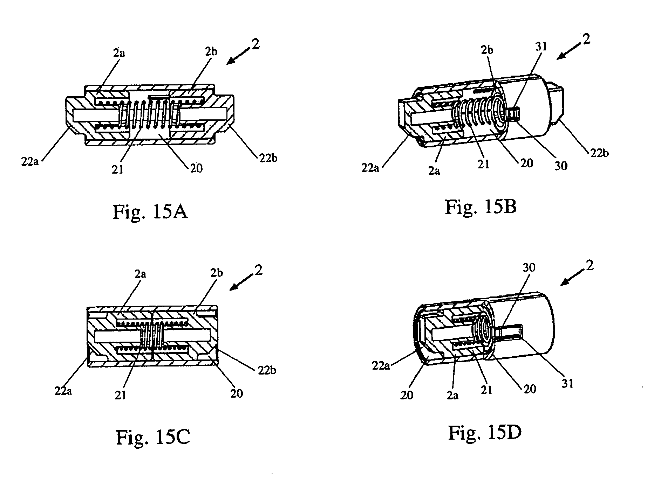

In a second embodiment, shown in figures 12 to 14, fastening means 7 are dispensed with and in their place retractable lateral prolongations 2a and 2b are added to the shaft 2, shown in detail in figures 15A, 15B, 15C and 15D, with both of said lateral prolongations 2a and 2b housed in two holes located on the support part 3. In the event of a head-on collision, the sliding part 6 retracts said lateral prolongations 2a and 2b. The shaft 2 comprises an axial orifice 20, with the lateral prolongations 2a and 2b partially housed in said orifice 20, and also comprises a spring 21 housed inside the orifice 20 between both lateral prolongations 2a and 2b.

The lateral prolongations 2a and 2b comprise respective slopes 22a and 22b, and the sliding part 6 comprises two lateral arms 6a and 6b which comprise respective slopes 66a and 66b facing the slopes 22a and 22b of the lateral prolongations 2a and 2b respectively. In the event of a collision, when the sliding part 6 is moved, the slopes 66a and 66b of the lateral arms 6a and 6b exert pressure on the slopes 22a and 22b of the lateral prolongations 2a and 2b, thus retracting said lateral prolongations 2a and 2b and bringing about the detachment of the shaft 2 from the support part 3. The sliding part 6 comprises a central wall 6c which pushes the shaft 2.

With reference to figures 15B and 15D, the lateral prolongations 22a and 22b comprise at least one projection 30 and the shaft 2 comprises at least one groove 31, with the axial movement of the lateral prolongations 22a and 22b being guided by said projections 30 and said groove 31.

## Claims

1. Pedal with an anti-collision safety mechanism for a vehicle, said pedal (1) pivoting around a shaft (2) connected to a support part (3), and the safety mechanism comprising
fastening means (7) connected to the support part (3) and which are used to fasten the shaft (2), with said fastening means (7) being detached in the event of a head-on collision, and
a lever (5) so that, in the event of a head-on collision, a substantially deformation-resistant part (4) acts on the lever (5) and said lever (5) causes the shaft (2) to be detached from the support part (3),
**characterised in that**
said fastening means (7) comprise a part (8) that is clipped laterally to the support part (3) on each side of the shaft (2),
the safety mechanism further comprising a sliding part (6) so that, in the event of a head-on collision, the substantially deformation-resistant part (4) acts on the lever (5), said lever (5) acting on the sliding part (6) and said sliding part (6) pushing the shaft (2) of the pedal (1) and detaching the parts (8) of the fastening means (7), thus causing said shaft (2) to become detached from the support part (3).

2. Pedal with a safety mechanism according to claim 1, wherein each part (8) comprises at least one projection (9) upon which the sliding part (6) acts, pushing said projection (9) and unclipping the part (8) from the support part (3).

3. Pedal with a safety mechanism according to claim 2, wherein the projection (9) on each part (8) comprises a slope (10), and the sliding part (6) also comprises a slope (11) facing each slope (10), so that each slope (11) on the sliding part (6) is supported on the slope (10) on the corresponding part (8), forcing the slopes (11) against the slopes (10) while the sliding part (6) moves, thus unclipping the parts (8).

4. Pedal with a safety mechanism according to any of the preceding claims, wherein the fastening means (7) also comprise a wire (12) on either side of the shaft (2), with said wire (12) acting as an additional element fastening the part (8) to the support part (3).

## Patentansprüche

1. Pedal mit einem Sicherheitsmechanismus zum Verhindern von Kollisionen für Fahrzeuge, wobei das Pedal (1) sich um eine Welle (2) dreht, die mit einer Halterung (3) verbunden ist und der Sicherheitsmechanismus
Befestigungsmittel (7), die mit der Halterung (3) verbunden sind und dazu dienen, die Welle (2) zu befestigen, wobei die Befestigungsmittel (7) bei einem Frontalzusammenstoß gelöst werden, und
einen Hebel (5) umfasst, so dass bei einem Frontalzusammenstoß ein im Wesentlichen gegen Verformungen beständiges Teil (4) auf den Hebel (5) einwirkt und der Hebel (5) dazu führt, dass sich die Welle (2) von der Halterung (3) löst,
**dadurch gekennzeichnet, dass**
das Befestigungsmittel (7) ein Teil (8) umfasst, das seitlich an der Halterung (3) an jeder Seite der Welle (2) aufgesteckt ist,
wobei der Sicherheitsmechanismus außerdem ein Gleitteil (6) umfasst, so dass bei einem Frontalzusammenstoß das im Wesentlichen gegen Verformungen beständige Teil (4) auf den Hebel (5) einwirkt, so dass der Hebel (5) auf das Gleitteil (6) einwirkt und das Gleitteil (6) auf die Welle (2) des Pedals (1) drückt und die Teile (8) der Befestigungsmittel (7) löst und somit dazu führt, dass die Welle (2) von der Halterung (3) gelöst wird.

2. Pedal mit einem Sicherheitsmechanismus nach Anspruch 1, wobei jedes Teil (8) mindestens einen Vorsprung (9) umfasst, auf den das Gleitteil (6) einwirkt und auf den Vorsprung (9) drückt und das Teil (8) von der Halterung (3) abnimmt.

3. Pedal mit einem Sicherheitsmechanismus nach Anspruch 2, wobei der Vorsprung (9) auf jedem Teil (8) eine Schräge (10) umfasst und das Gleitteil (6) ebenso eine Schräge (11) umfasst, die auf die Schräge (10) gewandt ist, so dass jede Schräge (11) auf dem Gleitteil (6) von der Schräge (10) des jeweils entsprechenden Teils (8) gehalten wird und die Schrägen (11) gegen die Schrägen (10) gezwungen werden, während sich das Gleitteil (6) bewegt und somit die Teile (8) abnimmt.

4. Pedal mit einem Sicherheitsmechanismus nach einem der vorausgehenden Ansprüche, wobei das Befestigungsmittel (7) auch einen Draht (12) an jeder Seite der Welle (2) umfasst, wobei der Draht (12) als zusätzliches Befestigungselement des Teils (8) an der Halterung (3) fungiert.

## Revendications

1. Pédale dotée d'un mécanisme de sécurité anti-collision pour véhicule, ladite pédale (1) pivotant autour d'un arbre (2) connecté à une pièce de support (3) et le mécanisme de sécurité comprenant
un dispositif de fixation (7) relié à une pièce de support (3) et qui sont utilisés pour fixer l'arbre (2), ledit dispositif de fixation (7) étant détaché dans l'éventualité d'une collision frontale, et
un levier (5) de manière à ce que, dans l'éventualité d'une collision frontale, une pièce de forte résistance à la déformation (4) agisse sur le levier (5) et que ledit levier (5) entraîne le détachement de l'arbre (2) de la pièce de support (3),
**caractérisé en ce que**
ledit dispositif de fixation (7) comprend une pièce (8) qui est fixée latéralement sur la pièce de support (3) de chaque côté de l'arbre (2),
le mécanisme de sécurité comprend, par ailleurs, une pièce mobile (6) de telle manière que, dans l'éventualité d'une collision frontale, la pièce de forte résistance à la déformation (4) agit sur le levier (5), ledit levier agissant sur la pièce mobile (6) et ladite pièce mobile (6) exerçant une poussée sur l'arbre (2) de la pédale (1) et détachant les pièces (8) du dispositif de fixation (7), permettant, de cette manière, à l'arbre (2) de se détacher de la pièce de support (3).

2. Pédale dotée d'un mécanisme de sécurité conformément à la revendication 1, où chaque pièce (8) comprend au moins une projection (9) sur laquelle la pièce mobile (6) agit, exerçant une poussée sur ladite projection (9) et détachant la pièce (8) de la pièce de support (3).

3. Pédale dotée d'un mécanisme de sécurité conformément à la revendication 2, où la projection (9) de chaque pièce (8) comprend une pente (10) et où la pièce mobile (6) comprend également une pente (11) faisant face à chaque pente (10), de manière à ce que chaque pente (11) de la pièce mobile (6) soit soutenue par la pente (10) de la pièce (8) correspondante, forçant ainsi les pentes (11) contre les pentes (10) tandis que la pièce mobile (6) se déplace, libérant ainsi les pièces (8).

4. Pédale dotée d'un mécanisme de sécurité conformément aux revendications précédentes, où le dispositif de fixation (7) comprend également un fil métallique (12) d'un côté de l'arbre (2), ledit fil (12) agissant en tant qu'élément supplémentaire de fixation de la pièce (8) sur la pièce de support (3).
